# EUROPÄISCHE PATENTSCHRIFT

(11) **EP 0 970 303 B1**
(45) Veröffentlichungstag und Bekanntmachung des Hinweises auf die Patenterteilung: **25.09.2002**
(21) Anmeldenummer: 97949968.8
(22) Anmeldetag: 28.11.1997
(51) Int. Cl.: F02D 33/02, F02B 37/16, F02B 33/44

(54) **VORRICHTUNG ZUM STEUERN EINES SCHUBUMLUFTVENTILS**
AMBIENT AIR-PULSED VALVE CONTROL
DISPOSITIF DE COMMANDE DE SOUPAPE A AIR AMBIANT PULSE

(30) Priorität: 27.03.1997 DE 19712850
(43) Veröffentlichungstag der Anmeldung: 12.01.2000
(73) Patentinhaber: ROBERT BOSCH GMBH, 70442 Stuttgart (DE)
(72) Erfinder: TORNO, Oskar, D-71701 Schwieberdingen (DE); KLUTH, Carsten, D-70469 Stuttgart (DE); HÄMING, Werner, D-74861 Neudenau (DE); SURJADI, Iwan, D-71665 Vaihingen (DE); FRANKE, Steffen, D-71701 Schwieberdingen (DE); BÄUERLE, Michael, D-71706 Markgröningen (DE)
(86) Internationale Anmeldenummer: DE9702779
(87) Internationale Veröffentlichungsnummer: WO98044249

(56) Entgegenhaltungen:
- DE-A- 2 823 067
- DE-C- 19 639 146
- US-A- 5 083 543
- US-A- 5 103 791
- PATENT ABSTRACTS OF JAPAN vol. 018, no. 408 (M-1647), 29.Juli 1994 & JP 06 117263 A (SUZUKI MOTOR CORP), 26.April 1994,

## Beschreibung

### Stand der Technik

Die vorliegende Erfindung betrifft eine Vorrichtung zum Steuern eines Schubumluftventils des Laders einer Brennkraftmaschine, wobei das Schubumluftventil in einer einen Verdichter im Saugrohr überbrückenden Schubumluftleitung angeordnet ist und das Schubumluftventil durch den Saugrohrdruck auf der Abstromseite der Drosselklappe steuerbar ist.

Eine derartige Vorrichtung ist aus DE 28 23 067 C2 bekannt. Das Schubumluftventil wird bei diesem Stand der Technik ausschließlich pneumatisch durch den Saugrohrdruck angesteuert, wobei das Schubumluftventil öffnet, wenn im Saugrohr auf der Abstromseite der Drosselklappe ein gewisser Unterdruck vorherrscht, der im Schubbetrieb des Fahrzeuges auftritt. Dadurch, daß über die Schubumluftleitung der Auslaß des Verdichters mit seinem Einlaß verbunden wird, verringert sich der Ladedruck im Saugrohr stromabwärts des Verdichters, was sich in einem besseren Ansprechverhalten des Motors auf ein schnelles Schließen der Drosselklappe äußert. Das Öffnungs- bzw. Schließverhalten des Schubumluftventils ist nicht optimal definiert bei einer alleinigen Ansteuerung durch den Saugrohrdruck.

Aus der US-A-5 083 543 ist bekannt, daß ein Schubumluftventil seinen Steuerdruck aus einem Unterdruckbehälter zugefügt bekommt. Dieser Unterdruckbehälter wird vom Saugrohrdruck gespeist. Damit wird das Schubumluftventil rein in Abhängigkeit vom Saugrohrdruckg gesteuert.

Gemäß Patent Abstracts of Japan, JP 06 117 263 A, Vol.No. 408 (M-1647), 29. Juli 1994, befindet sich in einer Schubumluftleitung ein Schubumluftventil, das in Abhängigkeit vom Unterdruck im Saugrohr auf der Abstromseite der Drosselklappe gesteurt wird. In einer Leitung zwischen der Saugrohr-Abstromseite und dem Schubumluftventil ist ein Vakuumbehälter eingefügt, dessen Unterdruck allein vom Unterdruck im Saugrohr auf der Abstromseite der Drosselklappe abhängt. Der Vakuumbehälter dient dazu, Luftströmungsgeräusche zu bedämpfen, die beim Öffnen des Schubumluftventils entstehen.

Der Anmeldung liegt daher die Aufgabe zugrunde, eine Vorrichtung der eingangs genannten Art anzugeben, die ein sehr definiertes Öffnen und Schließen des Schubumluftventils ermöglicht.

### Vorteile der Erfindung

Die genannte Aufgabe wird mit den Merkmalen des Patentanspruchs 1 Ein elektrisch steuerbares Magnetventil ist vorhanden, das in Abhängigkeit von einem Steuersignal entweder den Saugrohrdruck oder einen davon unabhängigen Steuerdruck aus einem Unterdruckbehälter dem Schubumluftventil zuführt, um es zu öffnen. Damit kann verhindert werden, daß das Schul-umluftventil bei einem schnellen Schließen der Drosselklappe, verursacht durch ein Pumpen der Ladeluftsäule, vorzeitig durch den Saugrohrunterdruck auf der Abstromseite der Drosselklappe geschlossen wird. Der Ladedruck wird gleichmäßig und stetig abgebaut. Ladedruckschwingungen und ein dadurch verursachtes Ruckeln des Fahrzeugs werden vermieden.

Gemäß den Unteransprüchen ist es vorteilhaft, daß ein das Magnetventil aktivierendes Steuersignal abgegeben wird, wenn der Lastgradient der Maschine eine von einem Soll-Ladedruck abhängige Schwelle übersteigt. Dem Lastgradienten kann ein Prädiktionswert überlagert werden, falls der aktuelle Lastgradient gegenüber dem einen Zeittakt zuvor gegebenen Lastgradienten angestiegen ist.

Es ist zweckmäßig, ein das Magnetventil aktivierendes Steuersignal bereitzustellen, wenn der Saugrohr-Absolutdruck unterhalb einer Druckschwelle liegt, bei der das Schubumluftventil öffnen würde. Danach sollte ein das Magnetventil aktivierendes Steuersignal bereitgestellt werden, wenn der Saugrohr-Absolutdruck die Druckschwelle übersteigt. Die Druckschwelle kann aus einem vom Ist-Ladedruck und dem Umgebungsdruck abhängigen Kennfeld entnommen werden.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein schematisches Blockschaltbild eines Motors mit der erfindungsgemäßen Vorrichtung und
Figur 2 ein Funktionsdiagramm der erfindungsgemäßen Vorrichtung.

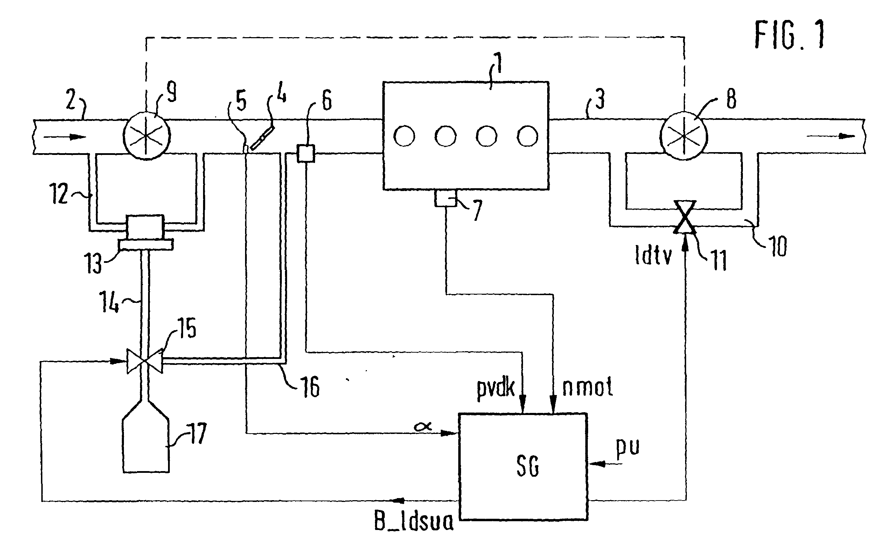

Die Figur 1 zeigt eine Brennkraftmaschine 1 mit einem Saugrohr 2 und einem Abgaskanal 3. Im Saugrohr 2 befinden sich eine Drosselklappe 4 und ein Sensor 5 zur Erfassung des Öffnungswinkels α der Drosselklappe 4. Außerdem ist im Saugrohr 2 abstromseitig der Drosselklappe 4 ein Drucksensor 6 zur Erfassung des Ist-Ladedrucks pvdk angeordnet. An der Brennkraftmaschine 1 ist ein Drehzahlsensor 7 zur Erfassung der Motordrehzahl nmot angebracht. Ein Steuergerät SG erhält den Öffnungswinkel α der Drosselklappe 4, den Ist-Ladedruck pvdk, die Motordrehzahl nmot und einen gemessenen Umgebungsdruck pu als Eingangssignale.

Die Brennkraftmaschine ist mit einem Lader ausgestattet, wobei eine Abgasturbine 8 im Abgaskanal 3 und ein Verdichter 9 im Saugrohr 2 angeordnet sind. Der Verdichter 9 wird über eine Welle von der Abgasturbine 8 angetrieben. Die Abgasturbine 8 ist in bekannter Weise von einer Bypass-Leitung 10 überbrückt, in der ein Bypass-Ventil 11 angeordnet ist. Das Steuersignal ldtv für das Bypass-Ventil 11 wird im Steuergerät SG generiert. Die Steuerung des Bypass-Ventils 11 wird hier nicht näher beschrieben, da sie nicht Gegenstand der Erfindung ist.

Der Verdichter 9 im Saugrohr 2 ist von einer Schubumluftleitung 12 überbrückt, über die Luft aus dem Saugrohr 2 an der Druckseite des Verdichters 9 in das Saugrohr 2 auf der Zugseite des Verdichters 9 rückgeführt werden kann. In die Schubumluftleitung 12 ist ein pneumatisches Schubumluftventil 13 eingefügt, das mit einer Steuerleitung 14 verbunden ist. Von dem Druck auf der Steuerleitung 14 hängt es ab, ob das Schubumluftventil 13 öffnet oder schließt.

In der Steuerleitung befindet sich ein elektrisch steuerbares Magnetventil 15. Ist dieses Magnetventil 15 geschlossen, so steht die Steuerleitung 14 mit einer Leitung 16 in Verbindung, die in das Saugrohr 2 auf der Abstromseite der Drosselklappe 4 einmündet. In diesem Fall liegt der auf der Abstromseite der Drosselklappe 4 vorherrschende Druck am Schubumluftventil 13 an. Durch Schließen der Drosselklappe 4, z.B. im Schubbetrieb des Fahrzeugs, entsteht auf der Abstromseite der Drosselklappe 4 ein Unterdruck. Hat dieser an das Schubumluftventil 13 gelangende Unterdruck eine gewisse Schwelle unterschritten, so öffnet das Ventil 13, so daß es über die Schubumluftleitung zu einem Druckabbau auf der Druckseite des Verdichters 9 im Saugrohr 2 kommt. Der Ladedruck auf der Aufstromseite der Drosselklappe 4 nimmt also ab. Dadurch wird ein Schwingen des Ladedrucks vermieden.

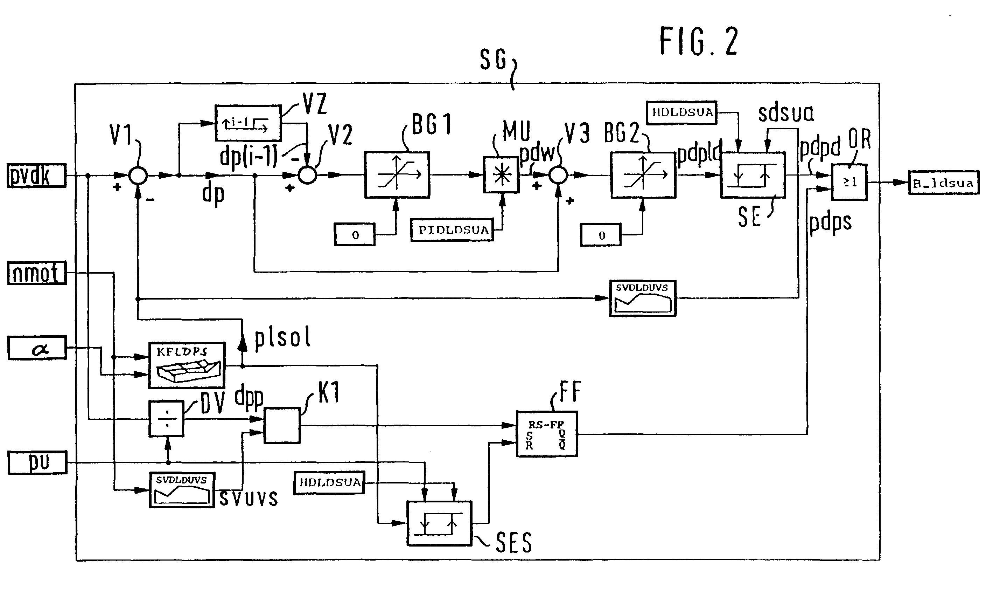

Allein die Steuerung des Schubumluftventils 13 durch den Druck auf der Abstromseite der Drosselklappe 4 führt zu einem nicht optimal definierten Öffnungs- bzw. Schließverhalten des Schubumluftventils 13. Dieser Mangel läßt sich dadurch beheben, daß unabhängig vom Druck im Saugrohr 2 auf der Abstromseite der Drosselklappe 4 das Schubumluftventil 13 steuerbar ist. Dazu ist an das elektrisch steuerbare Magnetventil 15 ein Unterdruckbehälter 17 angeschlossen. Wird das Magnetventil 15 geöffnet, so wird dem Schubumluftventil 13 ein Unterdruck aus dem Unterdruckbehälter 17 über die Steuerleitung 14 zugeführt, was zu einem sofortigen Öffnen des Schubumluftventils 13 führt. Von einem an dem Magnetventil 15 anliegenden Steuersignal B_ldsua hängt es ab, ob das Magnetventil 15 geöffnet oder geschlossen ist. Dieses Steuersignal B_ldsua wird vom Steuergerät SG erzeugt. Unter welchen Bedingungen das Steuersignal B_ldsua zur Aktivierung des Magnetventils 15 bereitgestellt wird, soll nachfolgend anhand der Figur 2 beschrieben werden.

Wie dem Funktionsdiagramm in Figur 2 zu entnehmen ist, ist das Steuersignal B_ldsua am Ausgang eines ODER-Gatters OR dann auf eine logische 1 gesetzt und aktiviert das Magnetventil 15, wenn entweder ein Signal pdpd oder ein Signal pdps an den Eingängen des ODER-Gatters OR anliegt.

Das Signal pdpd soll für eine sehr schnelle Ansteuerung des Magnetventils 15 während eines dynamischen Betriebs der Brennkraftmaschine sorgen. Das Signal pdpd für den dynamischen Betrieb wird gesetzt (logische 1), wenn der Lastgradient der Maschine die nachfolgend beschriebene Bedingung erfüllt. Der Lastgradient dp ist die im Verknüpfungspunkt V1 gebildete Differenz zwischen dem Ist-Ladedruck pvdk, der auf der Abstromseite der Drosselklappe 4 im Saugrohr 2 gemessen wird, und einem Soll-Ladedruck plsol. Der Soll-Ladedruck plsol kann in bekannter Weise aus einem von der Motordrehzahl nmot und dem Öffnungswinkel α der Drosselklappe abhängigen Kennfeld KFLDPS herausgelesen werden.

Aus dem Signal dp für den Lastgradienten wird ein Prädiktionswert pdw gebildet, indem zunächst in einem Verknüpfungspunkt V2 die Differenz zwischen dem aktuellen Lastgradienten dp und einem einen Zeittakt (i-1) zuvor gegebenen Lastgradienten dp(i-1) gebildet wird. Ein Verzögerungsglied VZ stellt den vorhergehenden Lastgradienten dp(i-1) an seinem Ausgang zur Verfügung. Das Differenzsignal wird dann über einen Begrenzer BG1 geführt, der es auf 0 setzt, wenn der aktuelle Lastgradient dp kleiner oder gleich dem vorherigen Lastgradienten dp(i-1) ist. Der Prädiktionswert pdw wird in einem Multiplizierer MU mit einem applizierbaren Zeitintervall PIDLDSUA multipliziert. Dieser nur für das bestimmte Zeitintervall bestehende Prädiktionswert pdw wird im Verknüpfungspunkt V3 dem Signal dp für den Lastgradienten überlagert. Am Ausgang des Verknüpfungspunktes V3 liegt daher für das genannte Zeitintervall ein gegenüber dem aktuellen Lastgradienten überhöhter Signalwert pdpld an.

Der Prädiktionswert pdw hat also nur dann einen von 0 abweichenden positiven Wert, wenn der aktuelle Lastgradient dp größer ist als der einen Zeittakt zuvor gegebene Lastgradient dp(i-1). D.h., der Soll-Ladedruck plsol hat gegenüber dem Ist-Ladedruck pvdk wegen zunehmender Abnahme des Öffnungswinkels der Drosselklappe abgenommen. Das Schubumluftventil 13 müßte jetzt unverzüglich geöffnet werden, wenn der Lastgradient eine bestimmte Schwelle überschreitet. Durch die Überlagerung des Prädiktionswertes pdw erreicht der Lastgradient diese vorgegebene Schwelle schneller, so daß es zu einem früheren bzw.rascheren Öffnen des Magnetventils 15 und infolge davon zu einem rechtzeitigen Öffnen des Schubumluftventils 13 kommt.

Das Summensignal pdpld aus dem Signal dp für den Lastgradienten und dem Prädiktionswert pdw wird vor der Schwellenwertentscheidung über einen Begrenzer BG2 geführt, der nur positive Werte des Signals pdpld durchläßt. Ein Schwellenwertentscheider SE führt den genannten Vergleich zwischen dem Signal pdpld und der vorgebbaren Schwelle sdsua durch. Die Schwelle sdsua wird aus einer Kennlinie SDLDSUA entnommen, die eine Funktion des Soll-Ladedrucks plsol ist. In vollastnahem Bereich ist die Schwelle sdsua deutlich größer als im leerlaufnahen Bereich der Brennkraftmaschine. Hat das Signal pdpld die Schwelle sdsua überschritten, so liegt am Ausgang des Schwellenwertentscheiders SE das Signal pdpd mit einer logischen 1 an. Der Schwellenwertentscheider SE besitzt eine Hysteresekennlinie, nach der das Ausgangssignal pdpd nach einer vorgebbaren Hysterese HDLDSuA auf 0 zurückgesetzt wird. Die Hysterese beschreibt die Differenz zwischen dem unterem und dem oberen Schaltpunkt und muß an die jeweilige Maschine angepaßt werden, so daß ein undefiniertes Hin- und Herschalten des Signals pdpd vermieden wird.

Das zweite am Eingang des ODER-Gatters OR anliegende Signal pdps soll gesetzt werden (logisch 1), wenn folgende Druckverhälnisse vorliegen:
Von einem Dividierer DV wird aus dem Ist-Ladedruck pvdk und dem Umgebungsdruck pu ein Quotient dpp gebildet, der näherungsweise dem Verdichterdruckverhältnis entspricht. Dieser Quotient dpp wird von einem Komparator K1 mit einer Schwelle svuvs verglichen. Die Schwelle svuvs wird einer Kennlinie SVDLDUVS entnommen, die eine' Funktin der Motordrehzahl nmot ist. Unterschreitet der Quotient dpp die Schwelle svuvs, so setzt das Ausgangssignal des Komparators K1 ein RS-Flipflop FF. Das Ausgangssignal pdps des RS-Flipflops wird also gesetzt, wenn das Verdichterdruckverhältnis einen Wert erreicht, bei dem das Schubumluftventil 13 öffnen könnte. Das Rücksetzen des RS-Flipflops FF und damit des Signals pdps, d.h. des Steuersignals B_ldsua für das Schubumluftventil 13, erfolgt dann, wenn der Soll-Ladedruck plsol den Umgebungsdruck pu übersteigt. Ein Schwellwertentscheider SES vergleicht den Soll-Ladedruck plsol mit dem Umgebungsdruck pu. Bei dieser Schwellwertentscheidung wird eine Hysterese HSLDSUA berücksichtigt, um ein undefiniertes Hin- und Herschalten des Signals pdps zu vermeiden.

Durch das beschriebene Setzen und Rücksetzen des Signals pdps und damit des Steuersignals B_ldsua für das Magnetfeldventil 15 wird das Schubumluftventil 13 wohl geöffnet, wenn der Saugrohrdruck auf der Abstromseite der Drosselklappe 4 unter eine gewisse Schwelle abgesackt ist. Das darauffolgende Schließen des Schubumluftventils 13 erfolgt aber nicht undefiniert durch den Saugrohrdruck, sondern ganz definiert durch das Steuersignal B_ldsua für das Magnetventil 15, das den Unterdruck aus dem Unterdruckbehälter 17 erst dann von der Steuerleitung 14 abtrennt, wenn der Soll-Ladedruck plsol den Umgebungsdruck pu unter Berücksichtigung einer Hysterese HSLDSUA übersteigt.

## Patentansprüche

1. Steuervorrichtung eines Schubumluftventils des Laders einer Brennkraftmaschine, wobei das Schubumluftventil in einer einen Verdichter im Saugrohr überbrückenden Schubumluftleitung angeordnet ist und das Schubumluftventil durch den Saugrohrdruck auf der Abstromseite der Drosselklappe steuerbar ist, wobei ein elektrisch steuerbares Magnetventil vorhanden ist, **dadurch gekennzeichnet, dass** das Magnetventil in Abhängigkeit von einem Steuersignal (B_ldsua) entweder den Saugdruck (pvdk) oder einen davon unabhängigen Steuerdruck aus einem Unterduckbehälter (17) dem Schubumluftventil (13) zuführt, um es zu öffnen.

2. Vorrichtung nach Anspruch 1, **dadurch gekennzeichnet, daß** Mittel (V1, VZ, V2, BG1, MU, V3, 3G2, SE, OR) vorhanden sind, die einen Lastgradienten (dp) aus der Differenz zwischen dem auf der Abstromseite der Drosselklappe (4) gemessenen Ist-Ladedruck (pvdk) und einem Soll-Ladedruck (plsol) bestimmen und, wenn der Lastgradient (dp) eine vom Soll-Ladedruck (plsol) abhängige Schwelle (sdsua) übersteigt, ein das Magnetventil (15) aktivierendes Steuersignal (B_ldsua) abgeben, so daß das Schubumluftventil (13) öffnet.

3. Vorrichtung nach Anspruch 2, **dadurch gekennzeichnet, daß** Mittel (V2, BG1, MU, V3) vorhanden sind, welche dem Lastgradienten (dp) einen Prädiktionswert (pdw) überlagern, falls der aktuelle Lastgradient dp gegenüber dem einen Zeittakt zuvor gegebenen Lastgradienten (dp(i-1)) angestiegen ist.

4. Vorrichtung nach Anspruch 3, **dadurch gekennzeichnet, daß** der Prädiktionswert (pdw) durch Differenzbildung zwischen dem aktuellen Lastgradienten (dp) und dem einen Zeittakt zuvor gegebenen Lastgradienten (dp(i-1)) entsteht und daß der Prädiktionswert (pdw) auf ein vorgebbares Zeitintervall (PIDLDSUA) begrenzt ist.

5. Vorrichtung nach Anspruch 1, **dadurch gekennzeichnet, daß** Mittel (K1, DV, SVDLDUVS, SES, FF) vorhanden sind, welche ein das Magnetventil (15) aktivierendes Steuersignal (B_ldsua) bereitstellen, wenn das Verhältnis des Saugrohrdrucks (pvdk) zum Umgebungsdruck (pu) unterhalb einer Schwelle (sldsua) liegt, bei der das Schubumluftventil (13) öffnen könnte.

6. Vorrichtung nach Anspruch 5, **dadurch gekennzeichnet, daß** die Deaktivierung nach der Aktivierung des Magnetventils (15) mit einer Hysterese (HSLDSUA) erfolgt.

## Claims

1. Control device of an air control valve of the charger of an internal combustion engine, the air control valve being arranged in an air control line which bypasses a compressor in the intake manifold and it being possible to control the air control valve by means of the intake manifold pressure on the outflow side of the throttle valve, an electrically controllable solenoid valve being present, **characterized in that**, as a function of a control signal (B_ldsua), the solenoid valve feeds either the intake pressure (pvdk) or a control pressure dependent thereon from a partial vacuum vessel (17) to the air control valve (13) in order to open it.

2. Device according to Claim 1, **characterized in that** means (V1, VZ, V2, BG1, MU, V3, BG2, SE, OR) are present which determine a load gradient (dp) from the difference between the actual charge pressure (pvdk) measured on the outflow side of the throttle valve (4) and a setpoint charge pressure (plsol) and if the load gradient (dp) exceeds a threshold (sdsua) which is dependent on the setpoint charge pressure (plsol), they output a control signal (B_ldsua) which activates the solenoid valve (15), with the result that the air control valve (13) opens.

3. Device according to Claim 2, **characterized in that** means (V2, BG1, MU, V3) are present which superimpose a predicted value (pdw) on the load gradient (dp) if the current load gradient (dp) has risen in comparison with the load gradient (dp(i-1)) defined one clock pulse before.

4. Device according to Claim 3, **characterized in that** the predicted value (pdw) is produced by forming differences between the current load gradient (dp) and the load gradient (dp(i-1)) defined one clock pulse before, and **in that** the predicted value (pdw) is limited to a predefinable time interval (PIDLDSUA).

5. Device according to Claim 1, **characterized in that** means (K1, DV, SVDLDUVS, SES, FF) are present which make available a control signal (B_ldsua) which activates the solenoid valve (15), if the ratio of the intake manifold pressure (pvdk) with respect to the ambient pressure (pu) is below a threshold (sldsua) at which the air control valve (13) could open.

6. Device according to Claim 5, **characterized in that** the deactivation takes place after the activation of the solenoid valve (15) with a hysteresis (HSLDSUA).

## Revendications

1. Dispositif de commande d'une soupape d'air ambiant pulsé d'un compresseur de moteur à combustion interne, comportant une électrovanne commandée, la soupape d'air ambiant pulsé étant installée dans une conduite d'air pulsé court-circuitant un compresseur dans la tubulure d'admission, et commandée par la pression dans la tubulure d'admission du côté aval du volet d'étranglement,
**caractérisé en ce qu'**
en fonction d'un signal de commande (B_ldsua), l'électrovanne fournit soit la pression d'aspiration (pvdk) soit une pression de commande indépendante à partir d'un réservoir à dépression (17), à la soupape à air pulsé (13) pour ouvrir celle-ci.

2. Dispositif selon la revendication 1,
**caractérisé en ce que**
des moyens (V1, VZ, V2, BG1, MU, V3, BG2, SE, OR) définissent un gradient de charge (dp) à partir de la différence entre la pression de charge réelle (pvdk) du côté aval du volet d'étranglement (4) et une pression de charge de consigne (plsol), et si le gradient de charge (dp) dépasse un seuil (sdsua) dépendant de la pression de charge de consigne (plsol), fournissent un signal de commande (B_ldsua) qui active l'électrovanne (15) pour ouvrir la soupape d'air ambiant pulsé (13).

3. Dispositif selon la revendication 2,
**caractérisé par**
des moyens (V2, BG1, MU, V3) qui combinent au gradient de charge (dp), une valeur prévisionnelle (pdw) si le gradient de charge actuel (dp) augmente par rapport au gradient de charge (dp (i - 1)) prédéterminé dans un temps précédent.

4. Dispositif selon la revendication 3,
**caractérisé en ce que**
la valeur prévisionnelle (pdw) est formée par la différence entre le gradient de charge actuel (dp) et un gradient de charge (dp (i - 1)) correspondant à un temps précédent, et
la valeur prévisionnelle (pdw) est limitée à un intervalle de temps prédéterminé (PIDLDSUA).

5. Dispositif selon la revendication 1,
**caractérisé par**
des moyens (K1, DV, SVDLDUVS, SES, FF) qui fournissent un signal de commande (B_ldsua) activant l'électrovanne (15) si le rapport de la pression de la tubulure d'admission (pvdk) à la pression ambiante (pu) est inférieur à un seuil (sldsua) pour lequel la soupape d'air ambiant pulsé (13) pourrait s'ouvrir.

6. Dispositif selon la revendication 5,
**caractérisé en ce que**
la désactivation se fait après l'activation de l'électrovanne (15) avec une hystérésis (HSLDSUA).
